Europäisches Patentamt

European Patent Office

Office européen des brevets

(11) Publication number: **0 409 734 A1**

## EUROPEAN PATENT APPLICATION

(21) Application number: 90402082.3

(22) Date of filing: 19.07.90

(51) Int. Cl.⁵: **C09K 3/12**

(30) Priority: 20.07.89 FR 8909790

(43) Date of publication of application:
23.01.91 Bulletin 91/04

(84) Designated Contracting States:
AT BE DE DK ES FR GB GR IT LU NL

(71) Applicant: **UNION CARBIDE CHEMICALS AND PLASTICS COMPANY, INC.**
**39 Old Ridgebury Road**
**Danbury Connecticut 06817-0001(US)**

(72) Inventor: **Paul, Guy**
**46 Promenade des Anglais**
**F-94210 La Varenne St. Hilaire(FR)**
Inventor: **Bazerque, Jean-Louis**
**48 Allée des Trembles**
**F-60530 Crouy en Thelle(FR)**

(74) Representative: **Rinuy, Santarelli**
**14, avenue de la Grande Armée**
**F-75017 Paris(FR)**

(54) Compositions based upon cellulosic ether gels for scraping pistons in pipelines.

(57) The present invention deals with compositions for pipeline scraping pistons to be used for separating different hydrocarbons transmitted in one and the same pipeline.

These compositions are aqueous compositions comprising a gel of hydrosoluble cellulosic ether cross-linked with a cross-linking agent selected from zirconium salts, organic compounds of titanium and dialdehydes such as glyoxal.

Such compositions form pipeline scraping pistons which may be manufactured and eliminated within the pipeline wherein they are used.

EP 0 409 734 A1

## COMPOSITIONS BASED UPON CELLULOSIC ETHER GELS FOR SCRAPING PISTONS IN PIPELINES.

The present invention relates to compositions based upon gels of cellulosic ethers for scraping pistons to be used in pipelines.

It is conventional, in the petroleum industry, to convey different types of products through pipelines.

Thus, for hydrocarbon transmitting pipelines, it is possible to use the same pipeline for transmitting successively different hydrocarbon fractions having different compositions and properties, such as boiling point and viscosity especially. To avoid diffusion of one product into another inside the pipeline, it is the practice to insert, between two products, a scraping piston. The piston moves through the pipeline between the products thus creating a mechanical tight barrier between two products and preventing a mixing thereof.

Hitherto, the scraping pistons which were used were normally made of polymeric or rubbery foam materials such as polychloroprene or polyurethanes. However, their use has been limited due to their high cost, and the necessity for extracting them from the pipeline wherein they have been introduced, after use.

As an alternative to these different materials, it has been proposed to use gels derived from cellulosic ethers, such as hydroxy-ethyl-cellulose dissolved in water. However, simple cellulosic ether gels lack the mechanical rigidity necessary for producing successful scraping pistons.

It has been recently discovered by the applicant company in association with the Société de Transport de Produits Pétroliers par Pipeline, socalled TRAPIL, that aqueous gels of cellulosic ethers having a sufficient mechanical strength could be produced by incorporating a suitable cross-linking agent into a mixture of such an ether and an aqueous liquid.

A scraping piston, manufactured from such a composition of cross-linked gel is indeed not only very economical to manufacture but, in addition, it may also be easily destroyed in situ, for instance by a mechanical or natural degradation. In view of its consistency, the scraping piston may be left within the pipeline without any subsequent risk of damage to the downstream equipment, such as controlling valve, pumps, etc...

Consequently, the present invention is directed to :
- an aqueous composition of a cross-linked gel of cellulosic ether for pipeline scraping piston ;
- a process for preparing a pipeline scraping piston comprising an aqueous composition of a crosslinked gel of a cellulosic ether ; and
- the application of an aqueous composition of a cross-linked gel of a cellulosic ether to the preparation of a pipeline scraping piston.

Other objects will appear along the description which follows and which deals only with an illustration of the present invention by preferred embodiments.

The compositions suitable for the preparation of scraping pistons according to the invention comprise essentially an aqueous liquid, a cellulosic ether and a suitable cross-linking agent, which are mixed, in suitable proportions, for obtaining the mechanical properties desired for this application.

The aqueous liquid is present in a major proportion by weight of at least 50 %, preferably comprised between 60 and 95 % and more particularly between 75 and 90% by weight with regard to the total weight of the composition.

The cellulosic ether entering into the compositions according to the present invention is a hydrosoluble cellulosic ether which has the property of dissolving into the aqueous liquid with formation of a gel.

Among these ethers , there are especially the alkyl-cellulose ethers, such as methyl-cellulose, ethyl-cellulose and propyl-cellulose, the hydroxy-alkyl-cellulose and carboxy-alkyl-cellulose ethers, and the mixed carboxy-alkyl-hydroxy-alkyl-cellulose ethers, such as hydroxy-ethyl-cellulose, carboxy-methyl-cellulose and carboxy-methyl-hydroxy-ethyl-cellulose.

These different hydrosoluble cellulosic ethers present generally an average number of alkyl, hydroxy-alkyl or carboxy-alkyl substitution radicals per anhydro-glucose group comprised between 0.1 and 2.5, preferably between 0.3 and 1.5 and a range of average molecular weight comprised between about 500,000 and 3,000,000.

The proportion of cellulosic ether to be used in the composition according to the invention is comprised between 2 and 30%, preferably between 5 and 25% and more particularly between 10 and 20% by weight with regard to the total weight of the composition.

The cross-linking agent entering into the composition according to the invention is selected from the compounds comprising zirconium salts, organic compounds of titanium and dialdehydes having a low molecular weight; the preferred cross-linking agents are zirconyl chloride (or zirconium oxychloride), ammonium tetralactotitanate and glyoxal, glyoxal being the most preferred cross-linking agent.

The proportion of cross-linking agent to be used in the composition according to the invention is comprised between 0.1 and 20%, preferably between 0.1 and 10% and especially between 0.5 and 2% by weight with regard to the total weight of the composition.

This proportion is particularly substantial for obtaining a cross-linked gel exhibiting the properties of strength and elasticity required for the contemplated application.

The use of such a proportion of this type of cross-linking agent enables actually to improve the mechanical resistance of the gel in such a manner so as not to break within the pipeline, wherein it is moving, while it remains sufficiently elastic to yield on the one hand to change of direction in the pipeline and on another hand to possible restrictions in the diameter of the latter.

The reaction of the cross-linking agent with the cellulosic ether, which results in a thickening of the cellulosic ether solution in the aqueous liquid, is not instantaneous and may require some time. Such an effect is particularly interesting when the preparation of the composition is made outside the pipeline, and then introduced therein and cross-linked in situ.

The compositions according to the invention may also comprise preferably an antifoam agent for reducing the air voids during the formation and cross-linking of the gel, thereby making it more resistant to penetration by hydrocarbons.

The antifoam agents which may be used in the compositions according to the invention are products having a very low surface tension such as silicons, poly alkylene oxides and $C_6$ to $C_{12}$ alcohols substituted by poly propylene or poly ethylene oxide groups.

If it is present, the antifoam agent is used in a proportion comprised between 0.001 and 1%, preferably between 0.01 and 0.1% by weight with regard to the total weight of the composition.

Other agents may be added into the compositions according to the invention optionally.

It is especially possible to add an organic acid, which is slowing down, or a base which is accelerating, the thickening time of the gel without changing in the wrong direction the mechanical strength of the cross-linked gel. Examples of organic acids which may thus be used are those which are solid at ambient temperature, such as citric acid or oxalic acid, citric acid being preferred. An example of a base is sodium tripolyphosphate.

If it is present, the organic acid is used in a proportion which depends upon the thickening time required and which is generally comprised between 0.1 and 10%, preferably between 1 and 5% by weight with regard to the total weight of the gelled composition.

Similarly, the base, when used, is in a proportion generally comprised between 0.1 and 1% and preferably between 0.1 and 0.5% by weight with regard to the total weight of the composition.

It is also possible to include in the composition to be used for the production of a scraping piston according to the invention additional ingredients, which depend upon the use to be made, for instance abrasive materials for improving the cleaning of fouled pipelines, corrosion inhibitors for pipelines transmitting particularly agressive products, or cleaning, colouring or deodorizing chemicals or biocide agents for struggling against odours or microorganisms.

The manufacture of scraping pistons according to the invention is made by first mixing the aqueous liquid, the cross-linking agent and the other ingredients, if any, and then adding the hydrosoluble cellulosic ether.

After vigorous stirring, the composition may be either introduced into a mould of suitable shape, especially spherical or cylindrical, prior to the introduction thereof into the pipeline, or directly pumped into the pipeline wherein it will be used.

The temperature at which occurs the reaction of gel formation and cross-linking, is comprised between 10 and 25°C and allows to obtain scraping pistons exhibiting optimum mechanical strength.

The pistons thus produced may be of cylindrical or spherical forms and they may be used in pipelines from the smallest upto the largest diameter currently in use.

The scraping pistons according to the invention have the advantage of being particularly economical to manufacture and to possess elastic properties enabling them to fit as well to restrictions as to increases in the diameter of the pipelines wherein they are moving.

They are of particular interest during the maintenance works of the pipelines since they may be introduced and manufactured in situ and eliminated, at the end, by a mere mechanical or natural degradation, inside the pipeline.

It should be noted that the use of an aqueous gel of hydroxy-ethyl-cellulose cross-linked with glyoxal, which will be illustrated in the following examples of laboratory tests and industrial application, wherein all the proportions are by weight, is the most preferred embodiment of the present invention:

Laboratory tests

Tests have been made in a laboratory for measuring the penetration of a body having a weight of 152g (cone plus rod) in different aqueous compositions of hydroxy-ethyl-cellulose containing 0 and 2% of glyoxal and disposed in a 80.5mm diameter container after a period of contact of the cone with the gel of 15 seconds, according to the method ASTA D-217.

It results from these tests that the aqueous compositions 10, 14 or 16% of hydroxy-ethyl-cellulose and 2% of glyoxal, with a penetration of respectively 158, 105 or 99 tenths of a millimetre, are the only ones to exhibit both properties of resistance to penetration and resistance to tearing, which are suitable for the manufacture of scraping pistons for pipelines according to the present invention.

Example on an industrial scale

One mixes at 14°C 1% of a solution at 1.5% of an antifoam agent which is an oleic alcohol with 17 propylene oxide units in an isopropanol azeotropic mixture*, 2% of a solution at 4% of glyoxal in water, 1% of citric acid and 82% of water.

After stirring in a laboratory mixer rotating at 2,000rpm, 14% of hydroxy-ethyl-cellulose**is added and stirring is continued.

\* UCON LO 500, commercially available product (Rgt TM)

\** CELLOSIZE QP-100 MH, commercially available product (Rgt TM)

The resulting composition is gelled after 3 1/2 hours and the scraping pistons obtained therefrom have given all satisfaction as well in a pipeline of 20 inches (508mm) presenting a restriction to 16 inches (406.4mm) in diameter as in a pipeline of 12 inches (304.8mm) presenting a restriction of 10 inches (254mm).

As a comparative test, a composition comprising the same proportion, i.e. 14% by weight, of the same hydroxy-ethyl-cellulose (CELLOSIZE QP-500-MH, Rgt TM) in 86% of water, without any other ingredient and, in particular, without any cross-linking agent, and prepared in the same conditions, has not produced a gel of sufficient strength to be used as a pipeline scraping piston, due to a too weak resistance and to a substantially total lack of elasticity.

hydrosoluble cellulosic ether and between 0.1 and 20% of cross-linking agent.

3. Composition according to anyone of the preceding claims characterized in that the hydrosoluble cellulosic ether is selected from hydroxy-alkyl-cellulose and is preferably hydroxy-ethyl-cellulose.

4. Composition according to anyone of the preceding claims characterized in that the cross-linking agent is selected from zirconyl chloride, ammonium tetralactotitanate and glyoxal.

5. Composition according to anyone of the preceding claims characterized in that the hydrosoluble cellulosic ether is hydroxy-ethyl-cellulose and the cross-linking agent is glyoxal.

6. Process for preparing pipeline scraping pistons characterized in that it consists in using an aqueous composition of a cross-linked gel of a hydrosoluble cellulosic ether according to anyone of claims 1 to 5.

7. Application of an aqueous composition of a cross-linked gel of a hydrosoluble cellulosic ether according to anyone of claims 1 to 5 to the preparation of pipeline scraping pistons.

## Claims

1. Composition for pipeline scraping piston characterized in that it consists in an aqueous composition comprising a gel of hydrosoluble cellulosic ether cross-linked by a cross-linking agent selected from zirconium salts, organic compounds of titanium and low molecular weight dialdehydes.

2. Composition according to claim 1 characterized in that it comprises by weight between 60 and 90% of aqueous liquid, between 2 and 30% of

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DERWENT FILE SUPPLIER WPIL, 1989, AN=89-256556, Derwent Publications Ltd, London, GB; & DD-A-266 614 (VEB ERDÖL) * Abstract * | 1,2,3,5,7 | C 09 K 3/12 |
| Y | US-A-4 649 999 (SANDY) * Claims 1,3,5,8 * | 1,2,3,5,7 | |
| A | DE-A-3 112 946 (HOECHST) * Claims 1,4 * | 1-3 | |

TECHNICAL FIELDS SEARCHED (Int. Cl.5)

C 09 K

The present search report has been drawn up for all claims

| Place of search | Date of completion of the search | Examiner |
|---|---|---|
| THE HAGUE | 18-08-1990 | NICOLAS H.J.F. |